# EUROPÄISCHE PATENTANMELDUNG

(11) **EP 0 935 053 A2**
(43) Veröffentlichungstag der Anmeldung: **11.08.1999**
(21) Anmeldenummer: 98124685.3
(22) Anmeldetag: 24.12.1998
(51) Int. Cl.: F01L 1/04, F02B 67/06, F16H 7/08

(54) **Kettenspannvorrichtung für eine Brennkraftmaschine**

(30) Priorität: 05.02.1998 DE 19804462
(71) Anmelder: DaimlerChrysler AG, 70567 Stuttgart (DE)
(72) Erfinder: Moser, Uwe, 73732 Esslingen (DE)

(57) **Zusammenfassung**

Eine Kettenspannvorrichtung (1) für eine Brennkraftmaschine ist in einem Steuergehäuse (2) angeordnet ist und beaufschlagt eine von der Kurbelwelle der Brennkraftmaschine antreibbare Steuerkette (4).

Um die Kettenspannvorrichtung (1) mit einfachen Mitteln montagefreundlich und funktionssicher auszubilden, umfaßt die Kettenspannvorrichtung (1) ein Spannglied (5), das zwischen einer die Kette (4) freigebenden Montagestellung und einer die Kette (4) beaufschlagenden Spannstellung (6) verstellbar ist, wobei in Montagestellung das Spannglied über einen lösbaren Verriegelungsstift (7) festgeklemmt ist, der über den Boden (8) des Steuergehäuses (2) der Brennkraftmaschine hinausreicht.

## Beschreibung

Die Erfindung betrifft eine Kettenspannvorrichtung für eine Brennkraftmaschine nach dem Oberbegriff des Anspruches 1.

Eine gattungsgemäße Kettenspannvorrichtung ist aus der DE 40 17 601 C2 bekannt. Die Kettenspannvorrichtung dieser Druckschrift übt eine Spannkraft auf eine Steuerkette aus, über die die Nockenwelle der Brennkraftmaschine antreibbar mit der Kurbelwelle verbunden ist. Die hydraulisch zu betätigende Kettenspannvorrichtung beaufschlagt eine bewegliche Kettenführung, die in Gleitkontakt mit der Steuerkette steht, so daß die von der Kettenspannvorrichtung erzeugte Spannkraft über die Kettenführung auf die Steuerkette übertragen wird. Die Kettenspannvorrichtung ist an einem Steuergehäuse befestigt, in dem die Steuerkette aufgenommen ist. Die Kettenspannvorrichtung sorgt bei einem Verschleiß der Kette für eine definierte Kettenspannung der Steuerkette.

Diese Vorrichtung ist aufgrund der hydraulisch zu betätigenden Stellelemente und Versorgungsleitungen des Kettenspanners kompliziert aufgebaut und entsprechend störanfällig und wartungsintensiv. Insbesondere für die Montage und Demontage müssen diverse Anschlüsse miteinander verbunden werden, außerdem ist eine Ölpumpe zur Bereitstellung des Hydraulikdrucks erforderlich.

Ein anderer, rein mechanisch wirkender Kettenspanner ist aus der Druckschrift DE 39 41 903 C2 bekannt. Der Kettenspanner enthält ein Spannglied, das in einem Gehäuse beweglich gelagert ist und von einer Feder in Richtung der Steuerkette beaufschlagt wird. Für die Montage des Kettenspanners kann das Spannglied mit Hilfe eines Verriegelungsstifts, der durch das Kettenspannergehäuse geführt ist, arretiert werden, so daß das Spannglied nicht auf die Steuerkette wirkt und eine leichte Montage möglich ist. Nach dem Einsetzen des Kettenspanners in das Gehäuse der Brennkraftmaschine wird der Verriegelungsstift entfernt und der Kettenspanner nimmt seine die Steuerkette beaufschlagende Spannposition ein.

Bei diesem Kettenspanner besteht die Gefahr, daß der Verriegelungsstift nach der Montage versehentlich nicht entfernt wird, so daß das Spannglied in seiner Montageposition verharrt und die Steuerkette nicht gespannt wird. Wird das Versehen nicht bemerkt, so kann die ungespannte Steuerkette durch Schlagen und Überspringen zu einem Motorschaden führen. Wird das Versehen erst nach Beendigung der Montage der Brennkraftmaschine bemerkt, so muß mit einem erheblichen Mehraufwand das Steuergehäuse entfernt und der Verriegelungsstift gelöst werden, wodurch zusätzliche Kosten entstehen.

Der Erfindung liegt das Problem zugrunde, die Kettenspannvorrichtung mit einfachen Mitteln montagefreundlich und funktionssicher auszubilden.

Dieses Problem wird erfindungsgemäß mit den Merkmalen des Anspruches 1 gelöst.

Die Länge des Verriegelungsstifts ist so bemessen, daß ein Abschnitt des Stifts aus dem Steuergehäuse herausragt, so daß eine Endmontage bei eingesetztem Verriegelungsstift, also bei einem in Montagestellung arretierten Spannglied, unmöglich gemacht wird, da die das Steuergehäuse verschließende Ölwanne nicht montiert werden kann. Das freie Ende des Verriegelungsstifts ragt nach unten über den Boden des Steuergehäuses hinaus, somit kann die Ölwanne nicht montiert werden, bevor nicht der Verriegelungsstift entfernt wurde und das Spannglied seine Spannstellung einnehmen kann; der Verriegelungsstift kann nicht im Steuergehäuse vergessen werden.

Der nach unten ragende Verriegelungsstift hat weiterhin den Vorteil, daß im Bereich des Steuergehäuses keine zusätzlichen Bauteile für die Montage der Kettenspannvorrichtung erforderlich sind, die neben einer Erhöhung der Teilevielfalt eine Schwächung des Gehäuses und Probleme mit der Dichtigkeit mit sich ziehen würden. Es ist insbesondere nicht erforderlich, in dem den Kettenspanner aufnehmenden Steuergehäuse einen Deckel vorzusehen, um den Stift nach dem Einbau des Kettenspanners durch den geöffneten Deckel abziehen zu können.

In einer zweckmäßigen Ausführung weist der Verriegelungsstift einen Betätigungsgriff auf, der in Montagestellung außerhalb des Bodens des Steuergehäuses liegt und dadurch einerseits das Greifen und Betätigen des Stifts erleichtert und andererseits eine Montage der Ölwanne bei versehentlich noch eingestecktem Verriegelungsstift ausschließt. Der Betätigungsgriff fällt durch seine Größe auch optisch auf, so daß der Monteur auf den sich noch im Steuergehäuse befindlichen Verriegelungsstift aufmerksam gemacht wird.

Der Betätigungsgriff ist vorzugsweise in Achsrichtung des Verriegelungsstifts gesehen länger als die in gleicher Richtung gemessene Tiefe der zu befestigenden Ölwanne, um sicherzustellen, daß die Ölwanne keinesfalls bei eingestecktem Stift montiert werden kann.

Der Verriegelungsstift kann aus einem Drahtformteil gefertigt sein, das leicht zu bearbeiten ist und aus dem insbesondere mit geringem Aufwand ein einteilig mit dem Stiftkörper ausgebildeter Betätigungsgriff geformt werden kann.

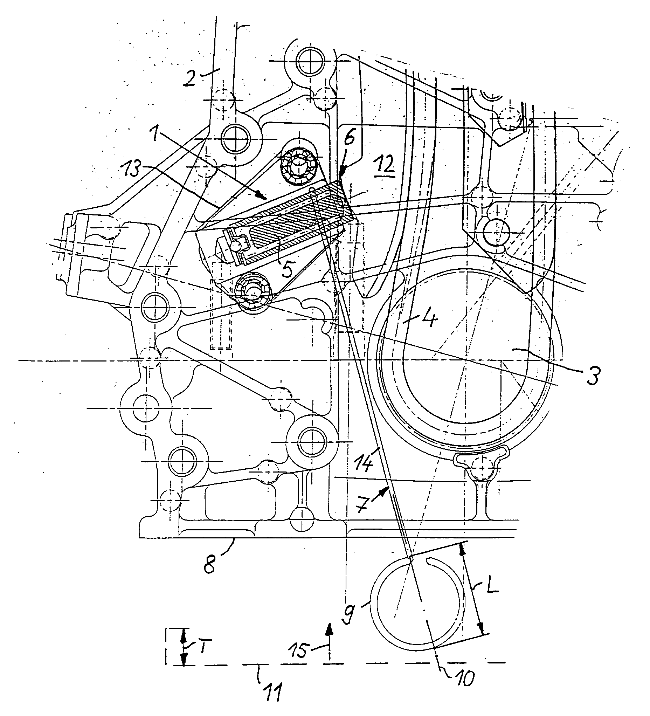

Weitere Vorteile und zweckmäßige Ausführungsformen sind den weiteren Ansprüchen, der Figurenbeschreibung und der Zeichnung zu entnehmen, in der ein Ausführungsbeispiel dargestellt ist.

Die Figur zeigt ein Steuergehäuse 2 im Seitenbereich des Kurbelgehäuses einer Brennkraftmaschine mit einer Kettenspannvorrichtung 1, bestehend aus einem kraftbeaufschlagten Spannglied 5 in einem Gehäuse 13, welches am Steuergehäuse 2 angeschraubt ist. Im Bereich der Stirnseite der Kurbelwelle 3 greift eine Steuerkette 4 bzw. ein Steuerriemen an, über die bzw. den eine obenliegende Nockenwelle angetrieben wird.

Um eine konstante Kettenspannung insbesondere auch bei einem Verschleiß der Steuerkette 4 aufrechtzuerhalten, drückt das Spannglied 5 der Kettenspannvorrichtung 1 gegen eine bewegliche Kettenführung 12, die an der Kettenaußenseite oberhalb der Kurbelwelle 3 angeordnet und quer zur Kettenlängsrichtung verschiebbar gelagert ist. In der gezeigten Spannstellung 6 drückt das Spannglied 5 mit einer konstanten, definierten Spannkraft gegen die Kettenführung 12, die sich unter dem Eindruck der Spannkraft gegen die Steuerkette 12 schiebt und diese spannt.

Für Montage- bzw. Demontagezwecke ist das Spannglied 5 der Kettenspannvorrichtung 1 in einer Montagestellung arretierbar, in der das Spannglied 5 von der Kettenführung 12 zurückgesetzt und im Gehäuse 13 der Kettenspannvorrichtung 1 aufgenommen ist. Die Kettenführung 12 ist somit frei von Spannkräften, außerdem stellt das Spannglied 5 kein aus dem Gehäuse 13 ragendes Hindernis während der Montage bzw. Demontage dar.

Die Arretierung des Spannglieds 5 im Gehäuse 6 erfolgt über einen Verriegelungsstift 7 mit einem Stiftkörper 14 und einem Betätigungsgriff 9. Der Verriegelungsstift 7 ist als einteiliges Drahtformteil ausgebildet. Der Stiftkörper 14 des Verriegelungsstifts 7 greift in Montagestellung mit seinem freien Ende durch eine Ausnehmung im Gehäuse 6 der Kettenspannvorrichtung 1 und in eine Arretiernut oder ähnliches im Spannglied 5 ein, wodurch das kraftbeaufschlagte Spannglied 5 in seiner Montagestellung verharrt und die Kettenführung 12 keiner Spannkraft unterliegt.

Der Verriegelungsstift 7 ist durch das Steuergehäuse 2 nach unten geführt und ragt über den Boden 8 des Steuergehäuses 2 hinaus, wobei der am Stiftkörper 14 angeformte Betätigungsgriff 9 sich vollständig außerhalb des Steuergehäuses 2 befindet. Der Betätigungsgriff 9 ist kreisringförmig ausgebildet mit einem Durchmesser L, der größer ist als die Tiefe T einer am Boden 8 des Steuergehäuses 2 zu befestigenden Ölwanne 11. In jedem Fall steht der Verriegelungsstift 7 in eingesetztem Zustand soweit über den Boden 8 über, daß die Ölwanne 11 nicht montiert werden kann, wobei gegebenenfalls zusätzlich zum Betätigungsgriff 9 auch noch ein Abschnitt des Stiftkörpers 14 aus dem Steuergehäuse 2 herausragen kann.

Im Ausführungsbeispiel liegt der Verriegelungsstift 7 schräg im Steuergehäuse 2, so daß die Längsachse 10 des Verriegelungsstifts mit dem Boden 8 des Steuergehäuses einen von 90° abweichenden Winkel einschließt. In der Projektion der Montagerichtung 15 der Ölwanne 11 muß der über den Boden 8 überstehende Teil des Verriegelungsstifts die Tiefe T der Ölwanne 11 überragen.

## Patentansprüche

1. Kettenspannvorrichtung für eine Brennkraftmaschine, wobei die Kettenspannvorrichtung (1) in einem Steuergehäuse (2) angeordnet ist und eine von der Kurbelwelle (3) der Brennkraftmaschine antreibbare Steuerkette (4) beaufschlagt,
**dadurch gekennzeichnet,**
daß die Kettenspannvorrichtung (1) ein Spannglied (5) umfaßt, das zwischen einer die Steuerkette (4) freigebenden Montagestellung und einer die Steuerkette (4) beaufschlagenden Spannstellung (6) verstellbar ist, wobei in Montagestellung das Spannglied (5) über einen lösbaren Verriegelungsstift (7) festgeklemmt ist, der über den Boden (8) des Steuergehäuses (2) der Brennkraftmaschine hinausreicht.

2. Kettenspannvorrichtung nach Anspruch 1,
**dadurch gekennzeichnet,**
daß der Verriegelungsstift (7) einen Betätigungsgriff (9) aufweist, der in Montagestellung des Verriegelungsstifts (7) außerhalb des Bodens (8) des Steuergehäuses (2) liegt.

3. Kettenspannvorrichtung nach Anspruch 2,
**dadurch gekennzeichnet,**
daß die in Richtung der Längsachse (10) des Verriegelungsstifts (7) gemessene Länge (L) des Betätigungsgriffs (9) größer ist als die Tiefe (T) einer am Boden (8) des Steuergehäuses (2) zu befestigenden Ölwanne (11).

4. Kettenspannvorrichtung nach einem der Ansprüche 1 bis 3,
**dadurch gekennzeichnet,**
daß der Verriegelungsstift (7) aus einem Drahtformteil besteht.
